# FASCICULE DE BREVET EUROPEEN

(11) **EP 2 706 103 B1**
(45) Date de publication et mention de la délivrance du brevet: **18.10.2017**
(21) Numéro de dépôt: 13180322.3
(22) Date de dépôt: 14.08.2013
(51) Int. Cl.: C10K 1/04, C10G 47/00, C10J 3/48, C10G 2/00, C10K 1/10, C10K 3/00, C10K 1/00

(54) **Procédé de gazéification de charge de matière carbonée à rendement amélioré**
Vergasungsverfahren einer Ladung von kohlenstoffhaltigem Material mit verbesserter Leistung
Method for gasification of a charge of carbonated material with improved efficiency

(30) Priorité: 05.09.2012 FR 1258276
(43) Date de publication de la demande: 12.03.2014
(73) Titulaire: COMMISSARIAT À L'ÉNERGIE ATOMIQUE ET AUX ÉNERGIES ALTERNATIVES, 75015 Paris (FR)
(72) Inventeur: Bedel, Laurent, 38950 Quaix en Chartreuse (FR); Guillaudeau, Jacques, 38100 Grenoble (FR); Ravel, Serge, 38100 Grenoble (FR); Setier, Pierre-Alexandre, 38300 Bourgoin Jallieu (FR)
(74) Mandataire: Nony

(56) Documents cités:
- WO-A1-2011/002527
- WO-A2-2007/123776
- WO-A2-2009/013232
- CA-A1- 2 776 369
- DE-A1-102008 017 820
- FR-A1- 2 955 866
- US-A- 3 817 724
- US-A1- 2009 145 843
- US-A1- 2010 129 691

## Description

### Domaine technique

La présente invention concerne un procédé de gazéification de la biomasse et, plus généralement de charge de matière carbonée, dans un réacteur de gazéification en vue de produire des combustibles ou des carburants.

L'invention vise à améliorer le rendement du procédé de gazéification et plus particulièrement à augmenter le taux de conversion du carbone de la biomasse et, plus généralement de charge de matière carbonée, en monoxyde de carbone et à recycler le CO₂ émis par le procédé de gazéification de la biomasse.

Bien que décrite ci-après en référence à un réacteur de type à lit fluidisé, l'invention s'applique également à une gazéification en réacteur de type à flux entraîné ou de type à lit fixe.

### Etat de la technique

La gazéification de la biomasse et du charbon est connue depuis longtemps. De manière générale, on peut la définir comme une transformation thermochimique de la biomasse ou du charbon par l'action de la chaleur en présence d'agents gazéifiants. On cherche à générer, à l'issue de la gazéification, un mélange de gaz dit gaz de synthèse qui comprend du monoxyde de carbone et de l'hydrogène (CO+H₂) entre autre.

Ainsi, les procédés de gazéification de la biomasse ligno-cellulosique permettent de générer un gaz de synthèse qui permet de produire en aval soit des carburants liquides soit d'autres produits organiques. Cette gazéification se déroule en présence typiquement de vapeur d'eau vers 800-900°C pour des réacteurs à lit fluidisé. Classiquement, ces procédés convertissent le carbone de la biomasse avec un gaz en sortie du gazéifieur avec une composition moyenne de 20-25 % en CO, 8-12 % en CH₄, 18-22 % en CO₂ et environ 38-42 % en H₂ et, des composés organiques C₂ à C₁₆ plus des composés inorganiques. Ce procédé consomme environ 25 à 35 % de l'eau introduite par la réaction de gazéification.

Un inconvénient majeur de ces procédés est que le taux de conversion du carbone de la biomasse en CO actuellement atteint n'est pas suffisamment élevé puisque de l'ordre de seulement 35-40 %. Un autre inconvénient majeur de ces procédés est que le CO₂ émis est actuellement perdu, en particulier au final il est rejeté dans l'atmosphère. Or, toute conversion du carbone de la biomasse, plus généralement de matière de charge carbonée, en CO₂ peut être considérée comme une perte de rendement de réaction pour obtenir au final du méthane de synthèse (SNG) ou un carburant liquide (Diesel Fischer Topsch) ou un autre produit organique (méthanol, diméthyle éther..).

Un autre inconvénient enfin est que ces procédés consomment de l'eau.

Il a déjà été proposé dans la littérature des procédés pour augmenter le taux de conversion du carbone de la biomasse en CO.

Ainsi, la demande de brevet WO 2008/033812 propose, pour y parvenir, de réaliser l'introduction d'un mélange d'hydrogène et de CO₂ directement dans le réacteur de gazéification, afin de mettre en oeuvre la réaction dite réaction inverse du gaz à l'eau (RWGS acronyme anglais pour « *Reverse Water Gas Synthesis »*), qui s'écrit H₂ + CO₂ → CO + H₂O, pour obtenir le rapport souhaité H₂/CO en sortie du réacteur. Il est indiqué dans cette demande que, l'hydrogène injecté dans le réacteur de gazéification peut être produit à partir d'une énergie décarbonée. Il est aussi proposé de recycler le CO₂ issu de la gazéification et de la synthèse Fisher-Tropsch en aval vers le réacteur de gazéification en complément de l'ajout d'hydrogène pour accentuer la réaction RWGS. L'introduction d'hydrogène et de CO₂ est réalisée directement au niveau du réacteur de gazéification car sa température de fonctionnement est suffisamment élevée pour mettre en oeuvre la réaction RWGS et qu'elle soit proche de l'équilibre.

Il est déjà connu de recycler le CO₂ en le réinjectant dans le réacteur de gazéification.

Ainsi, la demande de brevet FR 2955865 propose le recyclage de CO₂ et plus particulièrement sa réduction par du carbone lors de la pyrolyse d'une matière carbonée.

La demande de brevet FR 2955918 propose un procédé de production d'électricité à partir de matière première carbonée avec comme première étape une gazéification de cette matière carbonée sous CO₂ pour générer du CO qui ensuite est valorisé pour produire de l'électricité. Le CO₂ est recyclé vers l'unité de gazéification après oxydation du CO en CO₂.

Le brevet US 5, 937, 652 propose le recyclage du CO₂ et de l'eau pour la gazéification du charbon en gaz de synthèse. L'injection de CO₂ et de l'eau sont faites indépendamment l'une de l'autre. Ces injections visent à remplacer l'oxygène nécessaire à la gazéification du charbon et de réduire les émissions de CO₂ par son recyclage provenant des gaz de cheminée.

Ce brevet US 5, 937, 652 ne cherche pas à augmenter le taux de conversion du carbone provenant de la charge carbonée en CO, ni n'envisage de réduire la consommation d'eau.

La demande de brevet US 2010/129691 divulgue un procédé comportant une étape de gazéification d'une charge de matière carbonée par un réacteur de gazéification, et une étape supplémentaire générant un flux avec du dioxyde de carbone. Dans ce procédé, au moins une partie du dioxyde de carbone est réintroduite dans le réacteur de gazéification.

La demande de brevet WO2007/123776 divulgue une méthode de gazéification d'un combustible qui est introduit dans une chambre de gazéification de manière à produire un gaz amené au moins en partie dans une autre chambre. La chaleur générée par combustion dans cette autre chambre est transmise à la chambre de gazéification. En outre, l'eau recueillie en aval de la chambre de gazéification et le dioxyde de carbone produit par combustion sont susceptibles d'être réinjectés dans la chambre de gazéification.

La demande de brevet WO2011/002527 divulgue un procédé de conversion thermochimique de la biomasse avec injection du CO₂ dans un réacteur de gazéification, un nettoyage du gaz en aval du réacteur de gazéification, puis synthèse Fischer-Tropsch. De l'eau et une partie du CO₂ produits par la synthèse est prévue pour être réinjectée dans le réacteur de gazéification. Une étape de water-gas shift est réalisée en aval du réacteur de gazéification avant le nettoyage du gaz pour ajuster le rapport H2/CO.

La demande de brevet CA2776369 divulgue un procédé de conversion de gaz naturel en carburant diesel comprenant une étape consistant à introduire au moins en partie le naphta produit à la suite d'une synthèse par Fischer-Tropsch dans un reformeur autothermique (ATR) et/ou une unité de production d'hydrogène par reformage de méthane (SMR) pour reformer du syngas. Ce syngaz est ensuite réintroduit dans le réacteur de synthèse Fischer-Tropsch, ce qui permet d'augmenter le volume de carburant produit au final. Le ratio H₂/CO à l'entrée du réacteur de synthèse Fischer-Tropsch est ajusté par une unité de séparation qui régule la proportion d'hydrogène dans le syngaz.

Le but général de l'invention est de pallier au moins une partie des inconvénients de l'état de l'art de gazéification de biomasse et, plus généralement de charge de matière carbonée, en vue de produire un carburant liquide ou un autre produit de synthèse organique.

Un but particulier est de proposer un procédé de gazéification de biomasse, à taux de conversion en CO augmenté, qui permette le recyclage du CO₂ produit en aval de la gazéification et la réduction au moins en partie de la consommation d'eau.

### Exposé de l'invention

Pour ce faire, l'invention a pour objet un procédé de conversion thermochimique d'une charge de matière carbonée en un gaz de synthèse en vue de produire un combustible ou un carburant, notamment un carburant liquide, ou un autre produit de synthèse, selon la revendication 1. Ainsi, l'invention propose un procédé de (pyro-)gazéification ne générant pas de CO₂ et ne consommant pas d'eau par un recyclage simultané de ces deux agents gazéifiant, ce recyclage permettant de manière avantageuse d'augmenter le rendement de conversion du carbone de la charge carbonée en CO présent dans le gaz de synthèse nécessaire à l'obtention en aval d'un carburant liquide ou d'un autre produit de synthèse. Le taux de conversion du carbone de la charge carbonée en CO selon l'invention peut atteindre 70 % voire au-delà.

Selon un mode de réalisation avantageux, la vapeur d'eau (H2O) récupérée en aval de la gazéification et le dioxyde de carbone (CO2) produit par le nettoyage sont mélangés en amont du réacteur de gazéification.

De manière alternative, on peut prévoir que la vapeur d'eau (H2O) récupérée en aval de la gazéification et le dioxyde de carbone (CO2) produit par le nettoyage sont injectés séparément et directement dans le réacteur de gazéification. Une étape de reformage des gaz de tête issus de la synthèse Fischer-Tropsch est réalisé, puis l'hydrogène produit par reformage, est réinjecté dans le gaz de synthèse en amont de la synthèse Fischer-Tropsch et/ou lors de l'hydrocraquage des hydrocarbures produits par la synthèse Fischer-Tropsch. Autrement dit, contrairement à l'état de l'art et en particulier, à la demande de brevet WO2008/033812 citée en préambule, le procédé de gazéification selon ce mode ne nécessite aucun apport extérieur d'hydrogène H₂ ni de réaction de gaz à l'eau (WGS, acronyme anglais de « *Water Shift Gas* ») pour ajuster le ratio H₂/CO nécessaire à une synthèse de carburant par Fischer Tropsch.

Selon une caractéristique avantageuse, le rapport molaire entre le mélange d'agents gazéifiants (CO₂+H₂O) et la biomasse sèche est compris entre 3,5 et 4,5.

De préférence, la proportion de CO₂ dans le mélange d'agents gazéifiants (CO₂ + H₂O) injecté dans le réacteur de gazéification est supérieure à 55 %, de préférence encore supérieure à 75 %.

Selon une variante avantageuse, la vapeur d'eau (H₂O) injectée dans le réacteur de gazéification est issue au moins en partie du refroidissement du gaz de synthèse qui est condensé avant une étape de compression.

Selon une variante avantageuse, on réalise en aval du nettoyage du gaz de synthèse, une synthèse selon le procédé Fischer-Tropsch pour produire un carburant liquide. Ainsi, selon cette variante, la vapeur d'eau (H₂O) injectée dans le réacteur de gazéification peut être issue au moins en partie de la synthèse Fischer-Tropsch. On réalise une étape de reformage des gaz de tête issus de la synthèse Fischer-Tropsch. On réinjecte l'hydrogène produit par reformage, dans le gaz de synthèse en amont de la synthèse Fischer-Tropsch.

La réaction de gazéification peut être réalisée à des températures comprises 700 et 1600°C.

Selon une variante de réalisation, le réacteur de gazéification est un réacteur de type à lit fluidisé, la réaction de gazéification étant réalisée à des températures comprises entre 800 et 950°C.

Selon une variante alternative, le réacteur de gazéification est un réacteur de type à flux entrainé, la réaction de gazéification étant réalisée à des températures comprises entre 1400 et 1600°C.

L'invention concerne également une installation de conversion thermochimique de charge matière carbonée mettant en oeuvre en continu le procédé qui vient d'être décrit.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique du principe d'une installation de conversion thermochimique de charge matière carbonée mettant en oeuvre en continu le procédé de gazéification selon l'invention ;
- la figure 2 est un graphique de relevé de la teneur en eau à la sortie d'un réacteur de gazéification en fonction du % de CO₂ en tant qu'agent gazéifiant dans un mélange d'agents gazéifiants H₂O+CO₂, conformément à l'invention;
- la figure 3 est un graphique de relevé du nombre de moles de CO₂ par rapport au nombre moles de biomasse en entrée et sortie d'un réacteur de gazéification, en fonction du % de CO₂ en tant qu'agent gazéifiant dans un mélange d'agents gazéifiants H₂O+CO₂, conformément à l'invention ;
- la figure 4 est un graphique de relevé du taux de conversion du carbone de la biomasse introduite dans un réacteur de gazéification, en CO, en fonction du % de CO₂ en tant qu'agent gazéifiant dans un mélange d'agents gazéifiants H₂O+CO₂, conformément à l'invention.

Dans la description qui va suivre les termes « entrée », « sortie » « amont », « aval », sont utilisés par référence avec la direction de transfert de la biomasse et du gaz de synthèse dans l'installation de conversion mettant en oeuvre le procédé selon l'invention.

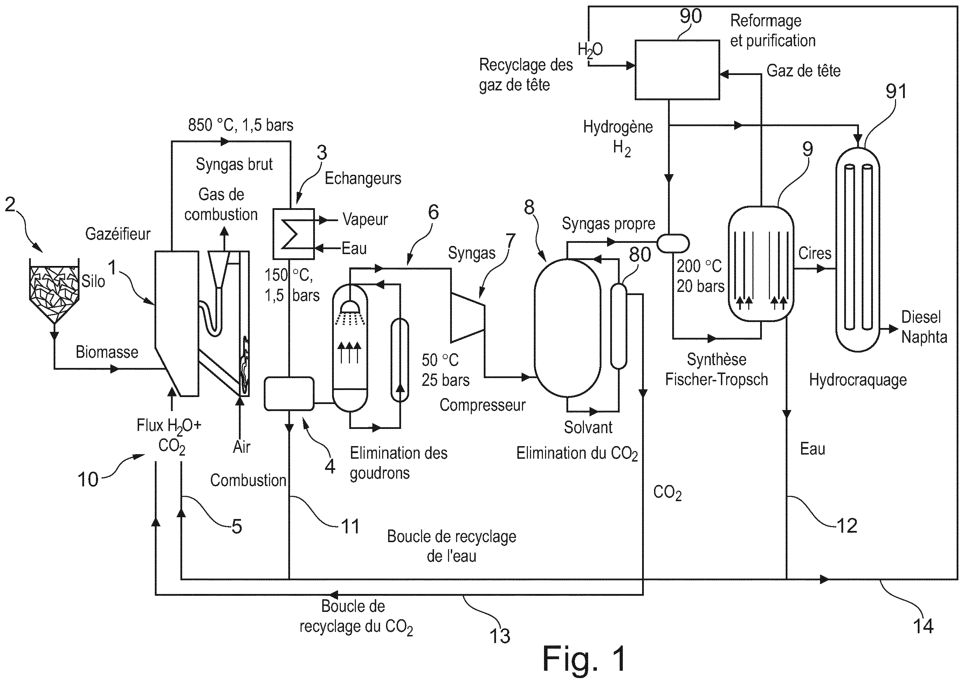

On précise que les légendes données en figure 1, et en particulier les réacteurs, dispositifs, températures et pression indiquées ne le sont qu'à titre d'exemple non limitatif.

Telle qu'illustrée en figure 1, l'installation en continu met en oeuvre le procédé d'une gazéification de la biomasse selon l'invention pour la synthèse d'un carburant de synthèse. Ainsi, un réacteur de gazéification 1, de type à lit fluidisé circulant (FICFB, acronyme anglais pour « *Fast Internal Circulating Fluidised Bed* ») est alimenté en continu par de la biomasse ligno-cellulosique depuis un réservoir de stockage approprié 2. L'alimentation en continu peut par exemple être réalisée au moyen d'au moins une vis sans fin, avantageusement comme décrit dans la demande de brevet WO 2005092749.

Conformément à l'invention, la gazéification est réalisée avec en tant que seuls agents gazéifiants, un mélange 10 de CO₂+H₂O recyclé, obtenu en aval dans l'installation de conversion et réinjecté dans le réacteur 1. Plus précisément, la vapeur d'eau H₂O est récupérée en aval de la gazéification dans deux zones distinctes et réinjectée par les lignes 11, 12 et le dioxyde de carbone CO₂ produit par le nettoyage du gaz de synthèse est récupéré et réinjecté par la ligne 13, le mélange entre vapeur d'eau et CO₂ ayant lieu en amont du réacteur de gazéification 1, dans une zone 10. Cette zone 10 de mélange peut être prévue avec un ou plusieurs réservoirs.

Pour amener et régler le débit individuellement de H₂O et de CO₂, on peut implanter une ou plusieurs pompes et un ou plusieurs débitmètres, non représentés sur les figures, sur la zone 10 ou sur chacune des lignes d'alimentation 11, 12, 13.

La température d'entrée du mélange H₂O+CO₂ peut être supérieure à 500°C et avantageusement de l'ordre de celle de fonctionnement du réacteur de gazéification 1. D'ailleurs, le réacteur 1 à lit fluidisé peut fonctionner de préférence entre 800 et 950°C. Le réacteur 1 peut également être un réacteur de type à flux entraîné (EFR, acronyme anglais de « *Entrained flow reactor* ») fonctionnant de préférence à des températures comprises typiquement entre 1400-1600°C.

A la sortie du réacteur de gazéification, un mélange brut de gaz de synthèse comprenant pour les espèces majoritaires du CO, CO₂, H₂O et H₂ est émis. Après refroidissement au travers d'un échangeur de chaleur 3, typiquement à des températures de l'ordre de 150°C, l'eau est condensée, par exemple par un condenseur. L'eau utilisée pour le refroidissement (boucle froide du condenseur) provient d'un circuit de fluides distinct. Cette eau condensée est alors envoyée vers un collecteur 4 puis renvoyée vers une chaudière ou un échangeur de chaleur à vapeur 5 pour être vaporisée avant réinjection dans le réacteur 1.

Après l'élimination des goudrons dans le cas des réacteurs à lit fluidisé dans une tour de lavage avec un solvant 6, le mélange brut de gaz de synthèse est envoyé dans un compresseur 7 pour être compressé, typiquement à 30-40 bars.

Le mélange de gaz de synthèse subit alors un nettoyage au gaz dans un dispositif 8 adapté afin d'extraire le CO₂. De préférence, le CO₂ est retiré du mélange gazeux selon un procédé d'absorption sur amine mis en oeuvre dans le dispositif 8. On précise ici que le procédé d'absorption sur amine aussi appelé lavage aux amines est déjà largement éprouvé à l'échelle industrielle et qu'il consiste à réaliser un captage du CO₂ dans une tour 80 avec des amines, en tant que solvant, typiquement vers 30-40°C. Un tel procédé permet avantageusement de capter environ 0,5 kg CO₂ par kg d'amine. Selon l'invention, le CO₂ capté est relâché par chauffage, typiquement à 120-130°C, puis recyclé vers le réacteur de gazéification 1 par la ligne 13.

Le gaz de synthèse nettoyé est alors envoyé vers un réacteur 9 mettant en oeuvre le procédé de synthèse Fischer-Tropsch. Pour atteindre le ratio H₂/CO souhaité, égal ici à 2 :1, on peut réaliser avantageusement un reformage dans un reformeur adapté 90 à partir d'une part du gaz de tête issue de la synthèse Fischer-Tropsch et d'autre part d'une partie de l'eau récupérée de celle-ci dans la ligne d'alimentation 14. A titre de variante, lorsque l'on souhaite réaliser une synthèse pour obtenir un gaz naturel de synthèse, usuellement connu sous l'appellation « Bio-SNG »(acronyme anglais de « *Bio-Synthetic Natural Gaz* »), le ratio H₂/CO doit être égal à 3, et on ajuste ainsi les débits de vapeur d'eau et de gaz de tête dans le reformeur 90 pour obtenir ce ratio.

Une autre partie de l'eau ou le cas échéant, notamment lorsqu'on ne réalise pas de reformage, toute ou partie de l'eau récupérée en sortie du réacteur 9 de synthèse Fischer-Tropsch peut être recyclée en alimentant le réacteur de gazéification 1 via la ligne 12.

Finalement, pour obtenir un diesel et un naphta, on réalise un hydrocraquage des produits issus du réacteur 9 de synthèse Fischer-Tropsch, dans un réacteur 91 adapté.

Les inventeurs ont cherché à trouver les meilleures gammes de fonctionnement d'un réacteur de gazéification 1 selon l'invention. Ils ont ainsi cherché à comprendre les mécanismes de réaction du mélange H₂O + CO₂ recyclé dans la réaction de gazéification et l'influence relative de chacun de ces deux uniques agents gazéifiants CO₂, H₂O.

Ils ont ainsi mené une étude sur un réacteur 1, de type expérimental. On précise ici que ce réacteur expérimental n'est pas à proprement parler un réacteur FICFB, de type à lit fluidisé circulant mais un réacteur à lit fluidisé à accumulation. Ce réacteur expérimental permet tout de même l'étude des paramètres de gazéification et de leurs influences. De plus, pour des paramètres équivalents à une installation industrielle telle qu'illustrée en figure 1, la composition du mélange de gaz brut en sortie est représentative.

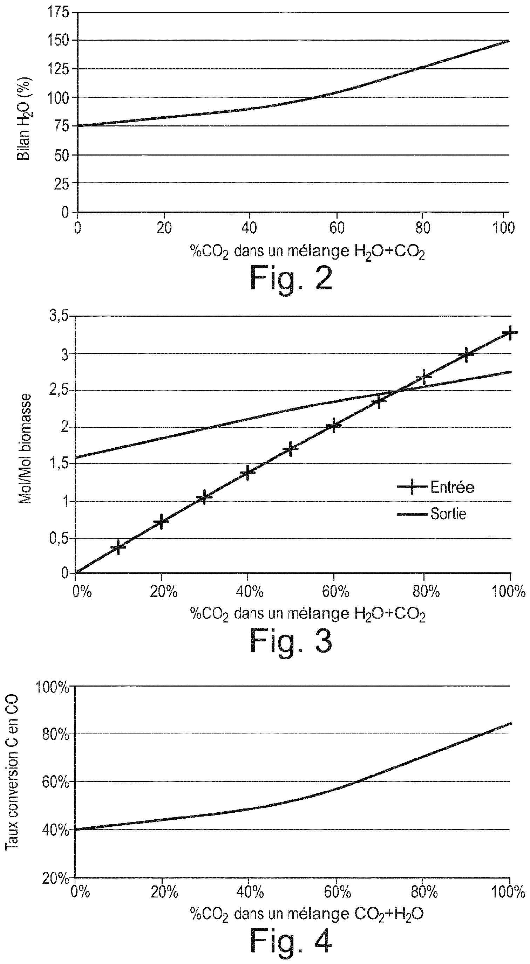

Les essais ont été menés à une température de 850°C, à une pression de 1,5 bar avec un rapport molaire entre agents gazéifiant (H₂O+CO₂) et biomasse égal à 4. La biomasse à gazéifier utilisée était du hêtre (séché naturellement - taux d'humidité de l'ordre de 8-9 %). Les essais montrent qu'au-delà de :
- 55-60 % de CO₂ comme agent gazéifiant, le rendement en eau est supérieur à 100 % (figure 2) et donc au-delà avec un recyclage le procédé ne nécessite plus d'ajout d'eau extérieure ;
- 75 % de CO₂ comme agent gazéifiant, le procédé de gazéification ne produit plus de CO₂. Le débit de CO₂ en sortie du réacteur de gazéification est égal au débit d'entrée. Au-delà, le débit de CO₂ en sortie devient inférieur à celui d'entrée (figure 3) ; Autrement dit, au-delà de 75 % de CO₂, le procédé de gazéification consomme du CO₂.

En outre, le mélange (H₂O et CO₂) qui peut être issu complètement du recyclage en aval, augmente la conversion du carbone de la biomasse en CO pour atteindre 70 % avec un mélange de 80 % de CO₂ comme agent gazéifiant (figure 4).

Ainsi, les inventeurs ont montré que le procédé de gazéification selon l'invention présente un rendement amélioré, avec un taux de conversion du carbone de la biomasse en CO augmenté, et une autonomie complète en eau et en CO₂.

Ainsi, avec un rapport molaire CO₂/H₂O égal à 4 comme mélange unique d'agents gazéifiants, la présente invention donne une conversion du carbone de la biomasse en CO de 80 % sans apport d'eau ni d'hydrogène extérieurs au procédé. Un tel rapport peut être obtenu aisément à l'aide de débitmètres à l'entrée du réacteur de gazéification.

D'autres variantes ou améliorations peuvent être prévues sans pour autant sortir du cadre de l'invention.

Ainsi, la vapeur d'eau (H2O) récupérée en aval de la gazéification et le dioxyde de carbone (CO2) produit par le nettoyage peuvent, au lieu d'être mélangés en amont et injectés sous forme de mélange comme il vient d'être décrit, être injectés séparément et directement dans le réacteur de gazéification.

Bien que décrite en référence exclusivement à la biomasse l'installation de conversion en un combustible ou un carburant, notamment un carburant liquide, ou un autre produit de synthèse, l'invention peut être utilisée pour la conversion d'autres charges de matière carbonée (charbon, pet coke, déchets organiques...).

## Revendications

1. Procédé de conversion thermochimique d'une charge de matière carbonée en un gaz de synthèse en vue de produire un combustible ou un carburant, notamment un carburant liquide, ou un autre produit de synthèse, selon lequel on réalise :
- une étape de gazéification de la charge de matière carbonée dans un réacteur (1),
- une étape de nettoyage du gaz de synthèse produit par la gazéification,
- en aval du nettoyage du gaz de synthèse, une synthèse selon le procédé Fischer-Tropsch pour produire du gazole liquide, et
- une étape de reformage des gaz de tête issus de la synthèse Fischer-Tropsch,
l'hydrogène produit par reformage, étant réinjecté dans le gaz de synthèse en amont de la synthèse Fischer-Tropsch et/ou lors de l'hydrocraquage des hydrocarbures produits par la synthèse Fischer-Tropsch,
la vapeur d'eau (H₂O) récupérée en aval de la gazéification et le dioxyde de carbone (CO₂) produit par le nettoyage étant injectés dans le réacteur de gazéification (1) en tant que seuls agents gazéifiants.

2. Procédé de conversion selon la revendication 1, selon lequel la charge de matière carbonée est de la biomasse, de préférence ligno-cellulosique.

3. Procédé de conversion selon la revendication 2, selon lequel le rapport molaire entre le mélange d'agents gazéifiants (CO₂ + H₂O) et la biomasse sèche est compris entre 3,5 et 4,5.

4. Procédé de conversion selon l'une des revendications précédentes, selon lequel la vapeur d'eau (H₂O) récupérée en aval de la gazéification et le dioxyde de carbone (CO2) produit par le nettoyage sont mélangés en amont du réacteur de gazéification.

5. Procédé de conversion selon l'une des revendications précédentes, la proportion de CO₂ dans le mélange d'agents gazéifiant (CO₂ + H₂O) injecté dans le réacteur de gazéification est supérieure à 55 %.

6. Procédé de conversion selon la revendication 5, selon lequel la proportion de CO₂ dans le mélange d'agents gazéifiants (CO₂ + H₂O) injecté dans le réacteur de gazéification est supérieure à 75 %.

7. Procédé de conversion selon l'une quelconque des revendications précédentes, selon lequel la vapeur d'eau (H₂O) injectée dans le réacteur de gazéification est issue au moins en partie du refroidissement du gaz de synthèse qui est condensé avant une étape de compression.

8. Procédé de conversion selon l'une des revendications précédentes, selon lequel la vapeur d'eau (H₂O) injectée dans le réacteur de gazéification est issue au moins en partie de la synthèse Fischer-Tropsch.

9. Procédé de conversion selon l'une quelconque des revendications précédentes, selon lequel la réaction de gazéification est réalisée à des températures comprises 700 et 1600°C.

10. Procédé de conversion selon l'une quelconque des revendications précédentes, selon lequel le réacteur de gazéification est un réacteur de type à lit fluidisé, la réaction de gazéification étant réalisée à des températures comprises entre 800 et 950°C.

11. Procédé de conversion selon l'une quelconque des revendications 1 à 9, selon lequel le réacteur de gazéification est un réacteur de type à flux entrainé, la réaction de gazéification étant réalisée à des températures comprises entre 1400 et 1600°C.

12. Installation de conversion thermochimique de charge matière carbonée, pour la mise en oeuvre en continu du_procédé selon l'une quelconque des revendications précédentes.

## Patentansprüche

1. Verfahren zur thermochemischen Umwandlung einer Charge eines kohlenstoffhaltigen Materials in ein Synthesegas, zur Herstellung eines Brennstoffs oder eines Treibstoffs, insbesondere eines flüssigen Treibstoffs, oder eines anderen Syntheseprodukts, bei welchem Verfahren die folgenden Schritte ausgeführt werden:
- ein Schritt der Vergasung der Charge des kohlenstoffhaltigen Materials in einem Reaktor (1),
- ein Schritt der Reinigung des durch die Vergasung erzeugten Synthesegases,
- stromabwärts der Reinigung des Synthesegases, eine Synthese nach dem Fischer-Tropsch-Verfahren zur Herstellung von flüssigem Dieselkraftstoff, und
- einen Schritt der Reformierung der bei der Fischer-Tropsch-Synthese erhaltenen Kopfgase,
wobei der durch Reformierung erzeugte Wasserstoff stromabwärts der Fischer-Tropsch-Synthese und/oder während des Crackens der durch die Fischer-Tropsch-Synthese erzeugten Kohlenwasserstoffe erneut in das Synthesegas injiziert wird,
wobei der stromabwärts der Vergasung zurückgewonnene Wasserdampf (H₂O) und das durch Reinigung erzeugte Kohlendioxid (CO₂) als einzige Vergasungsmittel in den Vergasungsreaktor (1) injiziert werden.

2. Verfahren nach Anspruch 1, bei dem die Charge des kohlenstoffhaltigen Materials Biomasse, vorzugsweise auf der Basis von Lignozellulose ist.

3. Verfahren nach Anspruch 2, bei dem das Molverhältnis zwischen dem Gemisch aus Vergasungsmittel (CO₂ + H₂O) und der trockenen Biomasse zwischen 3,5 und 4,5 beträgt.

4. Verfahren nach einem der vorstehenden Ansprüche, bei dem der stromabwärts der Vergasung zurückgewonnene Wasserdampf (H₂O) und das durch Reinigung erzeugte Kohlendioxid (CO₂) stromaufwärts des Vergasungsreaktors gemischt werden.

5. Verfahren nach einem der vorstehenden Ansprüche, bei dem der Anteil von CO₂ in dem Gemisch der Vergasungsmittel (CO₂ + H₂O), die in den Vergasungsreaktor injiziert werden, größer als 55% ist.

6. Verfahren nach Anspruch 5, bei dem der Anteil des CO₂ in dem Gemisch der Vergasungsmittel (CO₂ + H₂O), die in den Vergasungsreaktor injiziert werden, größer als 75% ist.

7. Verfahren nach einem der vorstehenden Ansprüche, bei dem der Wasserdampf (H₂O), der in den Vergasungsreaktor injiziert wird, zumindest zum Teil aus der Kühlung des Synthesegases stammt, das vor einem Kompressionsschritt kondensiert wird.

8. Verfahren nach einem der vorstehenden Ansprüche, bei dem der Wasserdampf (H₂O), der in den Vergasungsreaktor injiziert wird, zumindest zum Teil aus der Fischer-Tropsch-Synthese stammt.

9. Verfahren nach einem der vorstehenden Ansprüche, bei dem die Vergasungsreaktion bei Temperaturen zwischen 700 und 1600°C ausgeführt wird.

10. Verfahren nach einem der vorstehenden Ansprüche, bei dem der Vergasungsreaktor ein Reaktor mit Wirbelbett ist und die Vergasungsreaktion bei Temperaturen zwischen 800 und 950°C ausgeführt wird.

11. Verfahren nach einem der Ansprüche 1 bis 9, bei dem der Vergasungsreaktor ein Flugstromreaktor ist und die Vergasungsreaktion bei Temperaturen zwischen 1400 und 1600°C ausgeführt wird.

12. Anlage zur thermochemischen Umwandlung einer Charge eines kohlenstoffhaltigen Materials zur kontinuierlichen Ausführung des Verfahrens nach einem der vorstehenden Ansprüche.

## Claims

1. Method for thermochemical conversion of a charge of carbonated material into a synthesis gas with a view to producing a fuel, particularly a liquid fuel, or another synthesis product, according to which:
- a stage for gasification of the charge of carbonated material in a reactor (1),
- a stage for cleaning the synthesis gas produced by gasification,
- synthesis according to the Fischer-Tropsch process downstream from cleaning the synthesis gas to produce liquid diesel oil, and
- a stage for reforming the head gases coming from Fischer-Tropsch synthesis
are carried out, the hydrogen produced by reforming being reinjected into the synthesis gas upstream from Fischer-Tropsch synthesis and/or during hydrocracking of the hydrocarbons produced by Fischer-Tropsch synthesis,
the steam (H₂O) recovered downstream from gasification and the carbon dioxide (CO₂) produced by cleaning being injected into the gasification reactor (1) as sole gasifying agents.

2. Method for conversion according to claim 1, according to which the charge of carbonated material is biomass, preferably lignocellulosic biomass.

3. Method for conversion according to claim 2, according to which the molar ratio between the mixture of gasifying agents (CO₂ + H₂O) and the dry biomass is between 3.5 and 4.5.

4. Method for conversion according to one of the previous claims, according to which the steam (H₂O) recovered downstream from gasification and the carbon dioxide (CO₂) produced by cleaning are mixed upstream from the gasification reactor.

5. Method for conversion according to one of the previous claims, the proportion of CO₂ in the mixture of gasifying agents (CO₂ + H₂O) injected into the gasification reactor is greater than 55%.

6. Method for conversion according to claim 5, according to which the proportion of CO₂ in the mixture of gasifying agents (CO₂ + H₂O) injected into the gasification reactor is greater than 75%.

7. Method for conversion according to any one of the previous claims, according to which the steam (H₂O) injected into the gasification reactor at least partly comes from cooling the synthesis gas, which is condensed before a compression stage.

8. Method for conversion according to one of the previous claims, according to which the steam (H₂O) injected into the gasification reactor at least partly comes from Fischer-Tropsch synthesis.

9. Method for conversion according to any one of the previous claims, according to which the gasification reaction is carried out at temperatures between 700 and 1600° C.

10. Method for conversion according to any one of the previous claims, according to which the gasification reactor is a fluidised bed type reactor, the gasification reaction being carried out at temperatures between 800 and 950° C.

11. Method for conversion according to any one of claims 1 to 9, according to which the gasification reactor is an entrained flow type reactor, the gasification reaction being carried out at temperatures between 1400 and 1600° C.

12. Installation for thermochemical conversion of a charge of carbonated matter to put the method according to any one of the previous claims into continuous operation.
